# EUROPEAN PATENT SPECIFICATION

(11) **EP 1 709 894 B1**
(45) Date of publication and mention of the grant of the patent: **23.04.2008**
(21) Application number: 05109003.3
(22) Date of filing: 29.09.2005
(51) Int. Cl.: A47J 31/30

(54) **Moka type coffee maker**
Kaffeemaschine vom Espressotyp
Machine à café du type moka

(30) Priority: 04.04.2005 IT TO20050044 U
(43) Date of publication of application: 11.10.2006
(73) Proprietor: Spagnolo Design S.r.l., 10092 Beinasco TO (IT)
(72) Inventor: Spagnolo, Giuseppe, 10092, Beisnasco TO (IT); Spagnolo, Alessandro, 10092, Beinasco TO (IT)
(74) Representative: Notaro, Giancarlo

(56) References cited:
- GB-A- 1 230 269
- NL-C2- 1 009 143
- US-A- 3 368 476
- US-A- 3 670 641
- US-A1- 2003 205 145

## Description

The present invention relates to the field of the coffee-makers of the "moka" type, including a lower body and an upper body connected in a decoupling way to the lower body and defining a cavity for receiving the coffee.

US 2003/0205145 A1 describes a coffee-maker according to the preamble of claim 1.

The object of the present invention is to carry out a coffee-maker of the above-mentioned type which, with extremely simple means, is able to allow a comfortable and effective use of the coffee-maker, and at the same time attains additional functionalities with respect to the traditional coffee-makers.

In view of achieving this object, the object of the present invention is a coffee-maker carried out in conformity with one or more of the annexed claims.

Further features and advantages of the invention will be immediately comprehensible from the following description with reference to the enclosed drawings, which are given by way of not limitative example only, wherein:
- figure 1 is a general view of a first embodiment of the coffee-maker according to the invention,
- figure 2 is a view of the coffee-maker of figure 1 in the disassembled condition,
- figure 3 shows the coffee-maker of figure 2, in a different disassembling condition,
- figure 3b shows a particular embodiment of a quick coupling between the upper body and the lower body of the coffee-maker,
- figure 3c shows a further embodiment of the coffee-maker in the assembled condition,
- figure 4 is a general view of the coffee-maker of figures 1-3 in a version equipped with an auxiliary container which does not form part of the present invention,
- figures 5A and 5B are sectional views of an auxiliary coffee-maker/container assembly according to two additional variations which does not form part of the present invention,
- figure 6 shows thermal casings suitable for receiving/coating parts of the coffee-maker and the auxiliary container of figure 4, in the disassembled condition,
- figure 7 shows a condition of use of the aforesaid thermal casings on the auxiliary container an on part of the coffee-maker,
- figures 8A, 8B, 8c and 8d show a further embodiment of the coffee-maker which includes means for supporting an auxiliary container alongside the coffee-maker, said embodiment not forming part of the present invention,
- figures 9A, 9B and 9C still show a further embodiment of the invention, which includes means for supporting one or two auxiliary containers alongside the coffee-maker, said further embodiment not forming part of the present invention,
- figure 10 shows a further embodiment of the embodiment of the invention, which includes means for supporting the auxiliary container alongside the coffee-maker, said further embodiment not forming part of the present invention,- figure 11 shows a further embodiment of a thermal casing,
- figure 12 shows a further embodiment of a thermal casing,
- figure 13 shows a particular embodiment of the handle of the coffee-maker which does not form part of the present invention,- figure 14 shows a further embodiment of a coffee-maker which does not form part of the present invention,
- figures 15A and 15b show further embodiments of the auxiliary container which does not form part of the present invention, and
- figures 16 and 17 show a further embodiment of the thermal casing.

The object of the present invention is to define a coffee-maker of the "moka" type which presents such features to make the use more comfortable and effective.

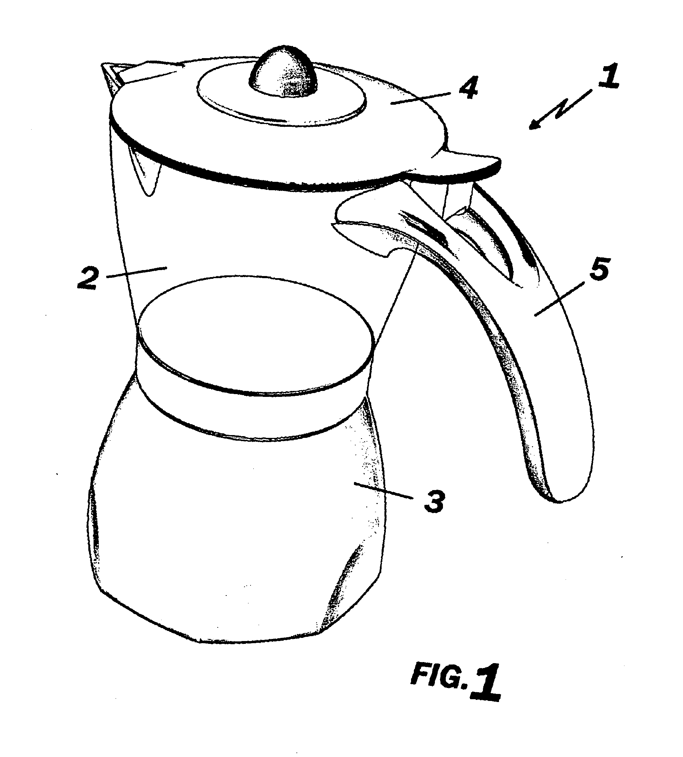

Referring to figure 1, numeral 1 generally shows a coffee-maker of the "moka" type in its assembled condition, including an upper body 2 connected in an decoupling way (for example in a screwing way according to the conventional technique) to a lower body 3, a lid 4 connected in an articulated way to the upper body 2 and a handle 5 joined to the upper body 2.

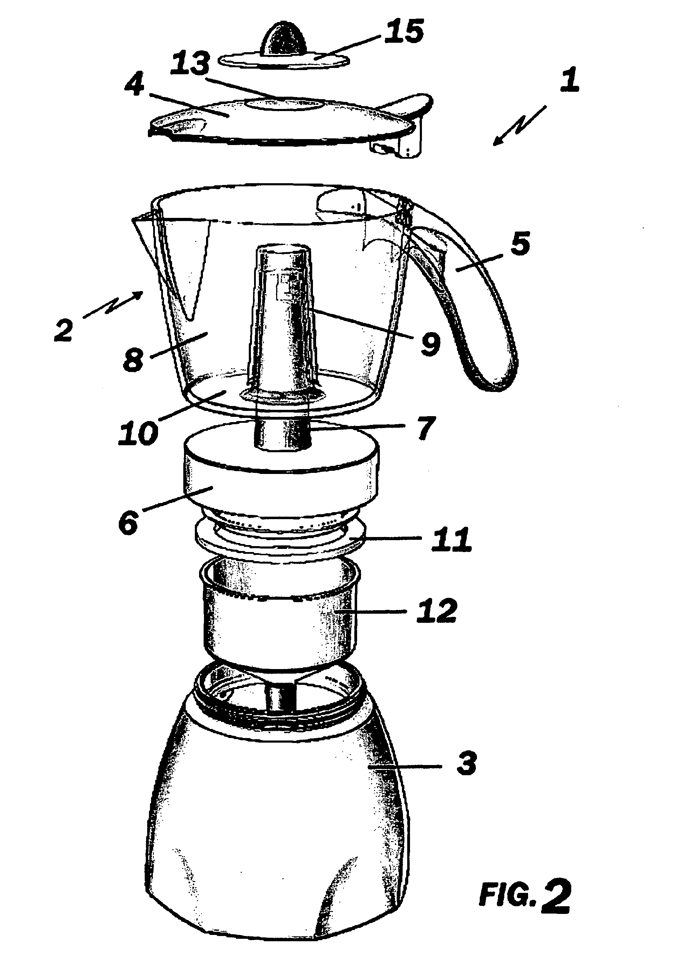

In figure 2, the coffee-maker 1 of figure 1 is shown in its disassembled condition, wherein the internal parts are also visible. In particular, the upper body 2 includes, in turn, a base part 6 embedding a column 7 for the delivery of the coffee, and an upper part 8 defining a cavity for the collection of the coffee and connected in an decoupling way, according to one of the features forming the object of the invention, to the base part 6. The upper part 8 of the upper body 2 defines, in its disassembled condition from the base part 6, a carafe-like container usable for serving the coffee. The carafe-like upper part 8 includes, in its lower part, a tubular appendix 9 protruding from a bottom part 10 thereof in order to receive in an decoupling way the column 7 for the delivery of the coffee.

For the purpose of simplifying the decoupling operation of the carafe-like upper part 8 from the base part 6, the tubular appendix 9 is connected in a decoupling way to the column 7 for the delivery of the coffee by means of a bayonet coupling or other quick coupling.

Always in figure 2, other elements, usually included in a coffee-maker of the "moka" type, are also visible, such as for example the filter 12 for containing the coffee powder and the gasket 11. Such elements are known in the art and do not form an object of the present invention.

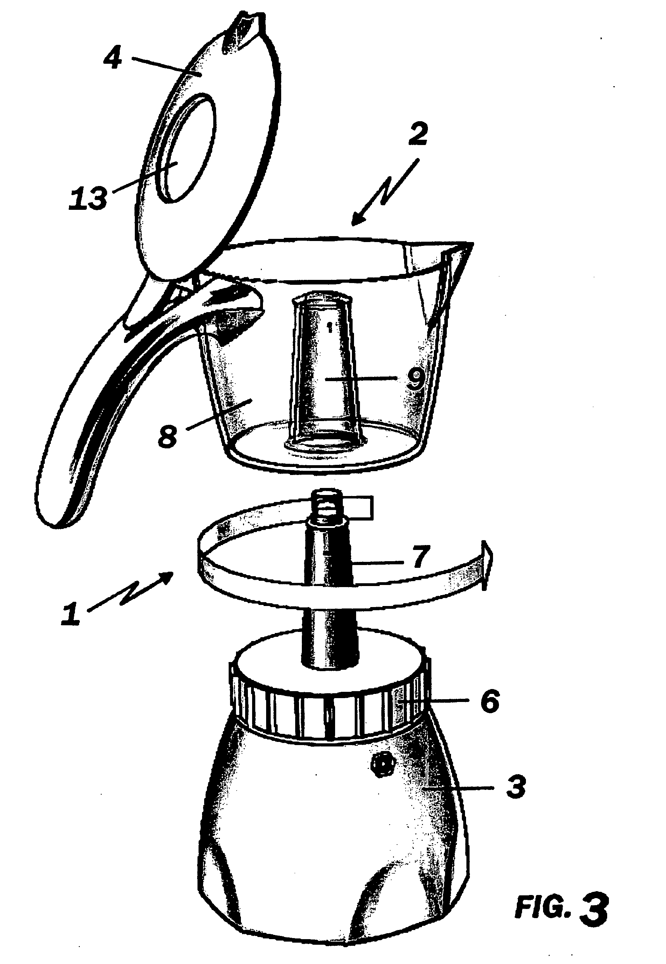

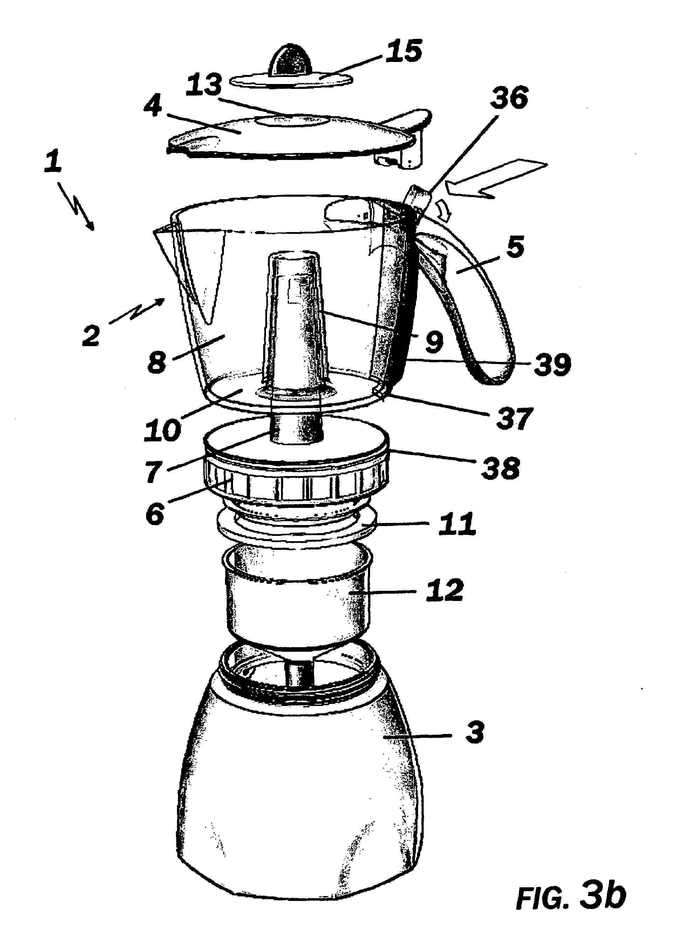

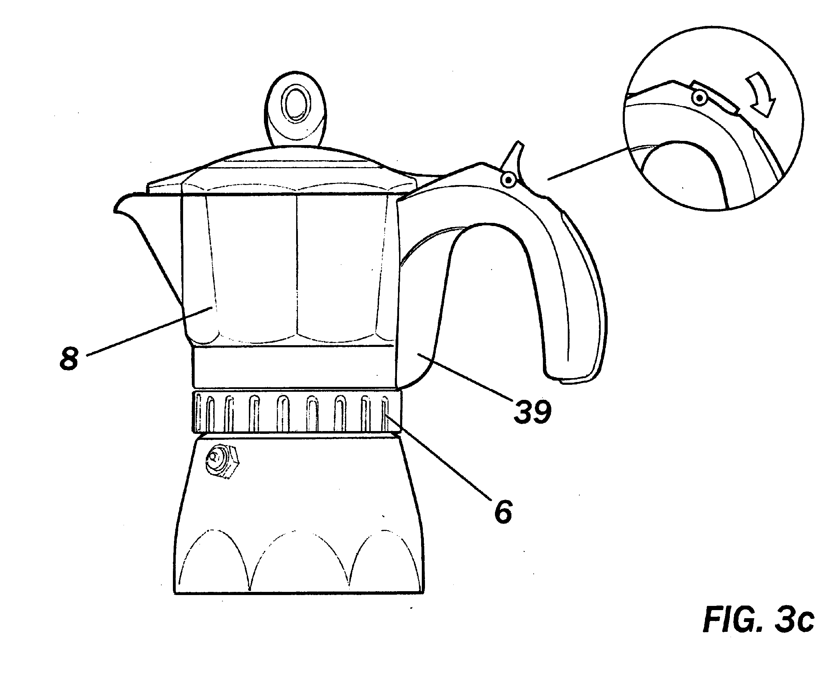

Referring to figure 3, the coffee-maker 1 subject of the present invention is shown in its use condition wherein the upper part 8 of the upper body 2 is decoupled from the base part 6 and forms a carafe-like container of a simple use for serving the coffee. The choice of a bayonet or other similar quick coupling between the tubular appendix 9 and the column 7 for the delivery of the coffee allows to make easier the release operation of the carafe-like container 8 from the rest of the coffee-maker. The carafe-like upper part 8 in its decoupled position from the rest of the coffee-maker 1 shows a lower weight and a hindrance that render it more comfortable and easy to use.

Figure 3b shows a further embodiment of the quick coupling between the carafe-like upper part 8 and the base part 6. In particular, by acting on the lever 36, the tooth 37 is disengaged from the circumferential throat 38 obtained on the base part 6. The throat 38 is extending for 360° so as to allow the coupling or decoupling of the carafe-like upper part 8 from the base part 6, independently of the relative angular position of the two elements.

Figure 3C shows a coffee-maker in an assembled condition, having a covering element 39 mounted in a decoupling way on the carafe-like container 8, in order to protect the control transmission of the tooth 37 from the heat during the preparation of the coffee.

The lever 36, for safety reasons, can be "lowered" for avoiding that in the use it unintentionally disengages the carafe-like part 8 from the base part 6.

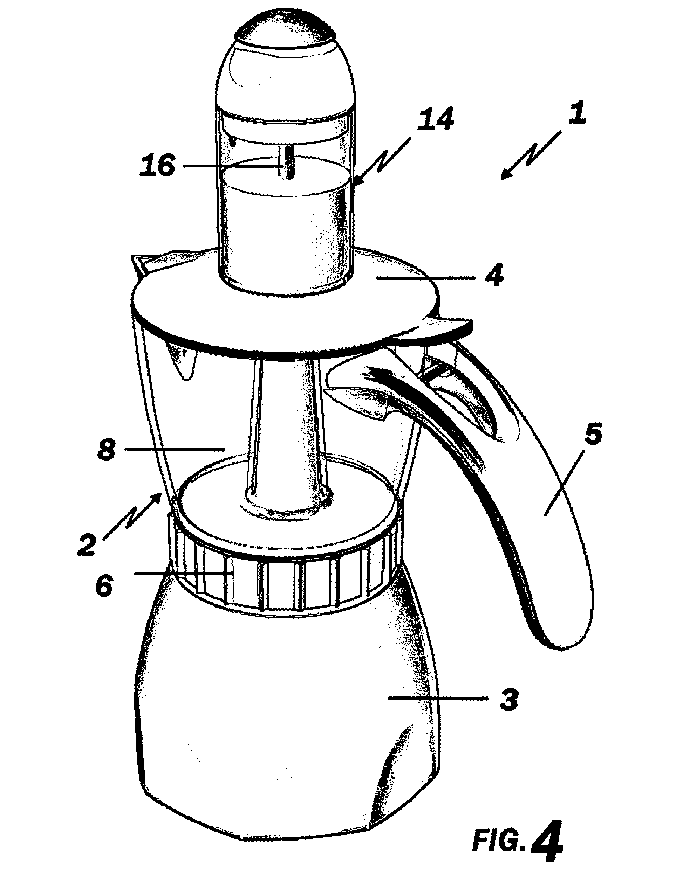

Figure 4 shows the coffee-maker in another embodiment, wherein the lid 4 connected in an articulated way to the upper body 2 includes a seat 13 (visible in figure 3) suitable for receiving an auxiliary container 14 for the warming of a liquid (for example milk or cream) contained therein during the preparation of the coffee. In a preferred embodiment, the seat 13, suitable for housing the auxiliary container 14, consists of an opening of the lid 4 centred with respect to the vertical axis of the coffee-maker. The coffee-maker 1 is further equipped with a removable plug 15 for closing the opening 13 of the lid 4 when the coffee-maker is used as a classical "moka" without the auxiliary container 14. In a preferred embodiment, the auxiliary container 14 is equipped with a tool 16 for whipping the milk.

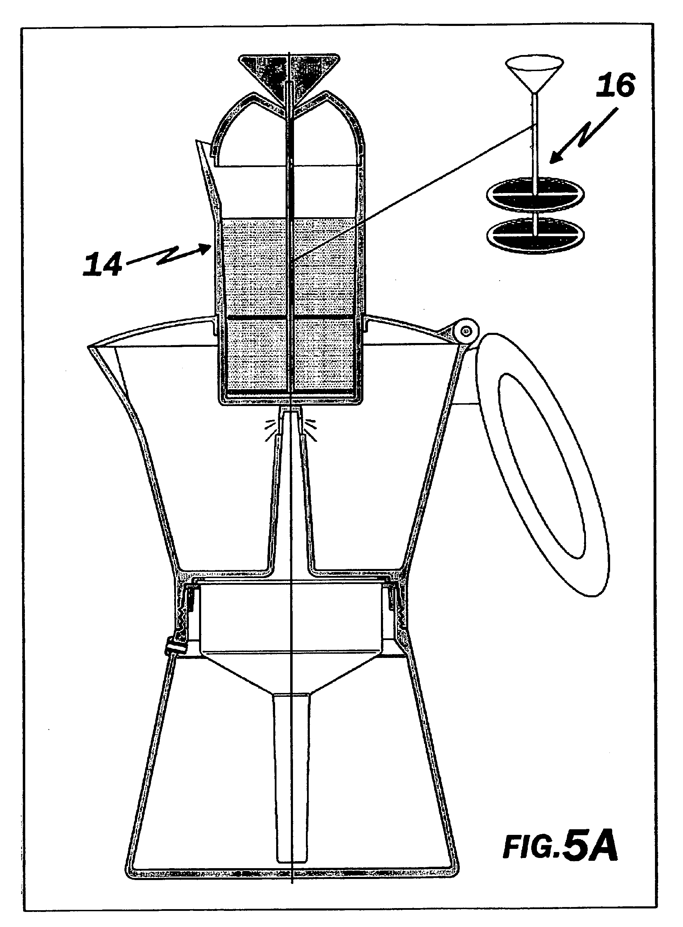

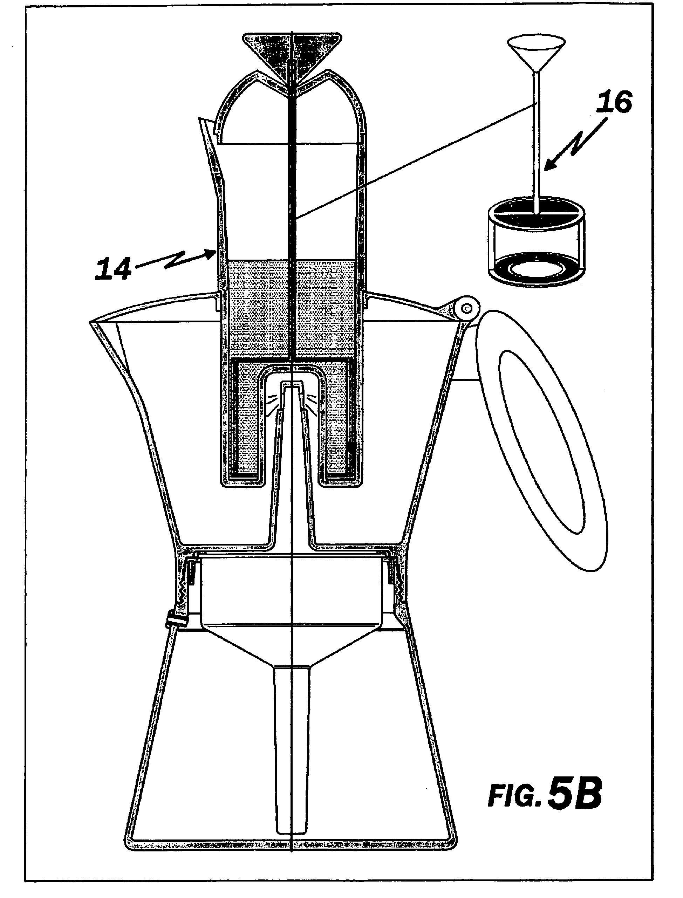

The auxiliary container 14 can have a flat bottom, as shown in figure 5A, which abuts on the column for the delivery of the coffee, or it can have a bottom showing a tubular cavity suitable for receiving and surrounding part of the column for the delivery of the coffee, as shown in figure 5 B. Accordingly, also the tool for whipping the milk can show different embodiments.

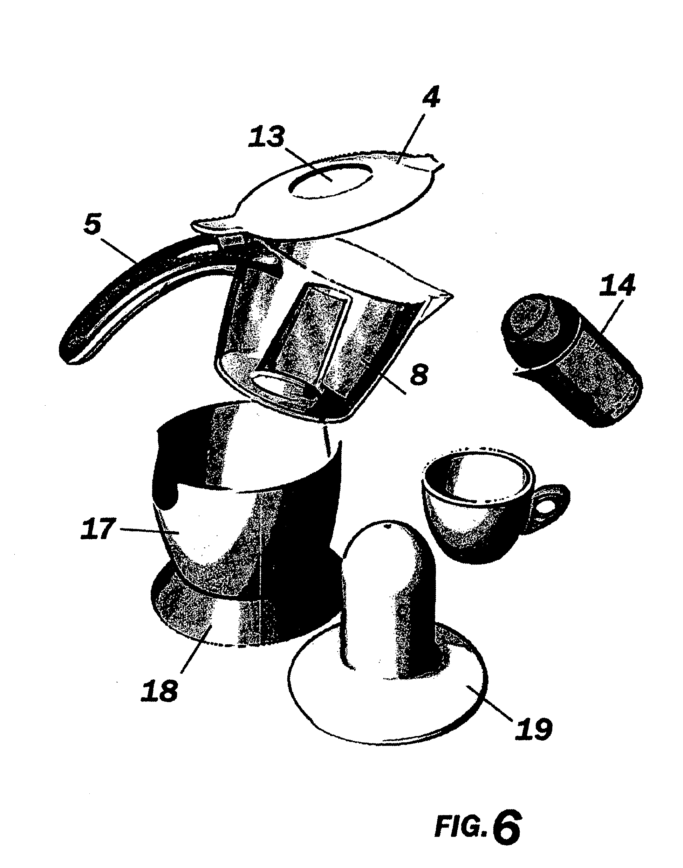

Referring to figure 6, the coffee-maker subject of the present invention is equipped with a thermally insulating casing 17 shaped such that it receives and contains the carafe-like upper part 8 for maintaining hot the coffee. The casing 17 further includes a base part 18 suitable for playing the function of support, for permitting to serve the coffee in the carafe 8.

It is also foreseen a further casing 19 for coating the auxiliary container 14 in its abutted condition on the lid 4 of the coffee-maker 1, or considered as such.

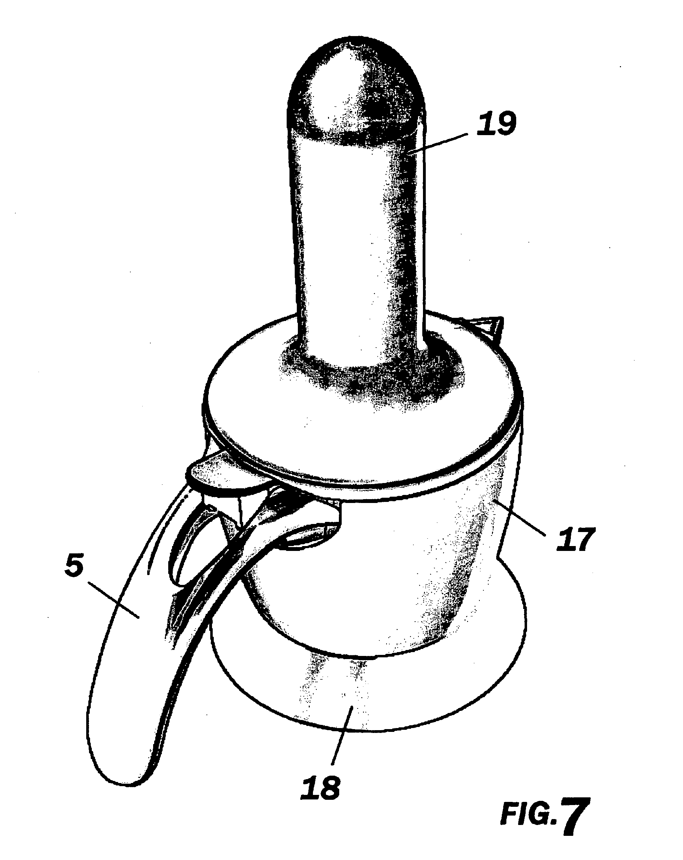

Figure 7 shows the casing 17 containing the carafe 8, with the auxiliary container 14 coated from the casing 19 superimposed. In this condition, it is also possible to serve and keep hot the coffee and the milk.

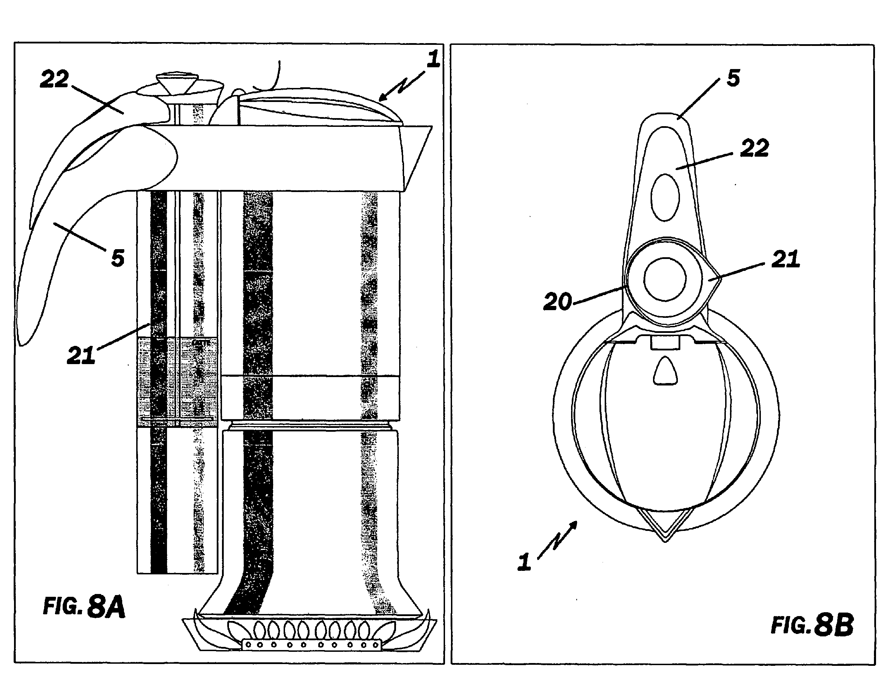

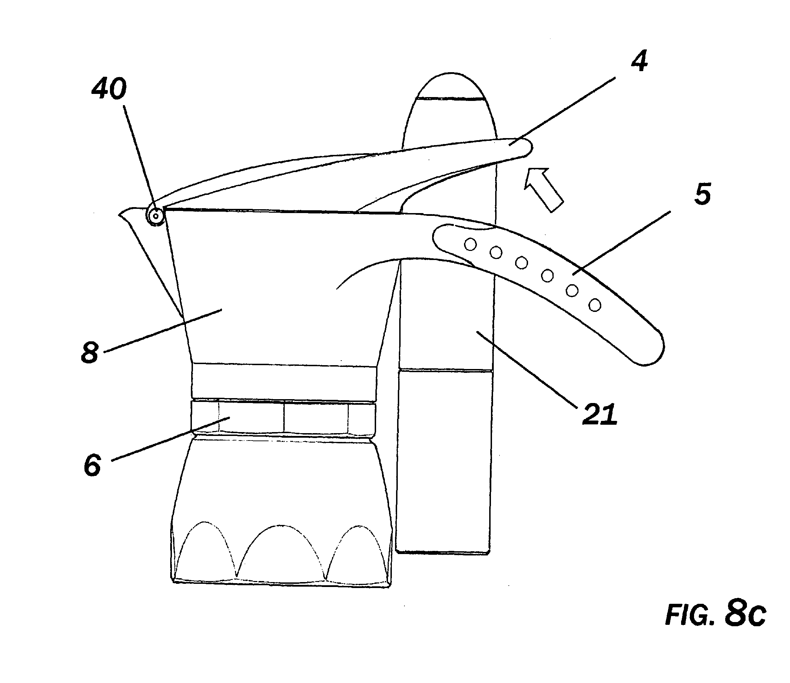

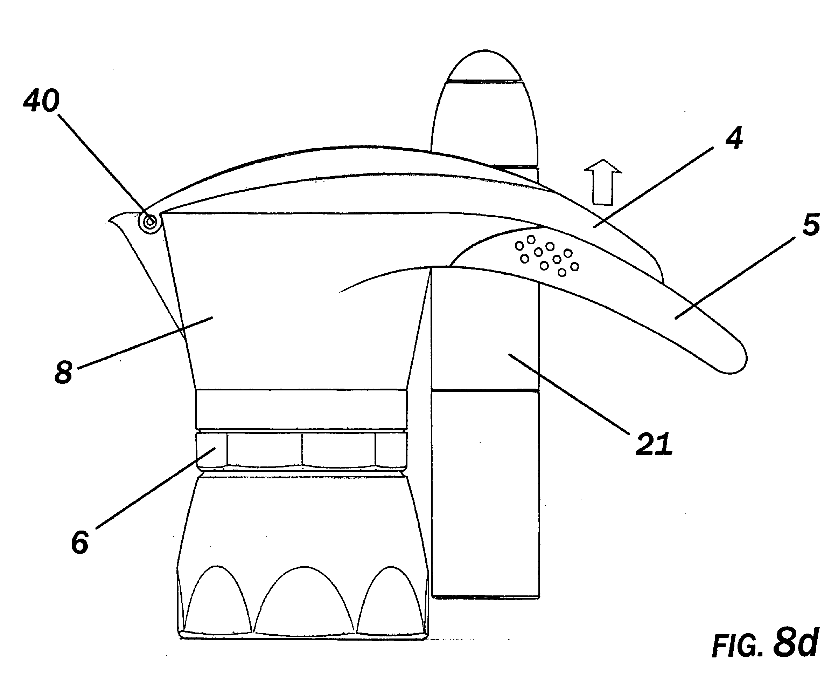

In figures 8A, 8B, 8c and 8d a coffee-maker 1 of the "moka" type, wherein the body of the coffee-maker is equipped with means for supporting an auxiliary container 21 alongside the body of the coffee-maker shown in such a position to have its bottom adjacent to the bottom of the coffee-maker, so as to allow to warm a liquid contained in the auxiliary container 21 by exploiting the same source of heat used for the preparation of the coffee. Particularly in figures 8A, 8B, 8c and 8d, such means for supporting the auxiliary container 21 foresee a seat 20 obtained on the handle 5 of the coffee-maker 1. In figures 8A and 8B there is also a handle 22 connected to the auxiliary container. In figures 8A, 8B, 8c and 8d the auxiliary container 21 is equipped with a tool for whipping the milk.

Figures 8c and 8d show two examples of coffee-maker where the hinge of the lid 4 of the coffee-maker (referred as 40) is positioned, contrary to the conventional technique, in a position diametrically opposed to the handle 5, that is on the spunt for the pouring of the coffee.

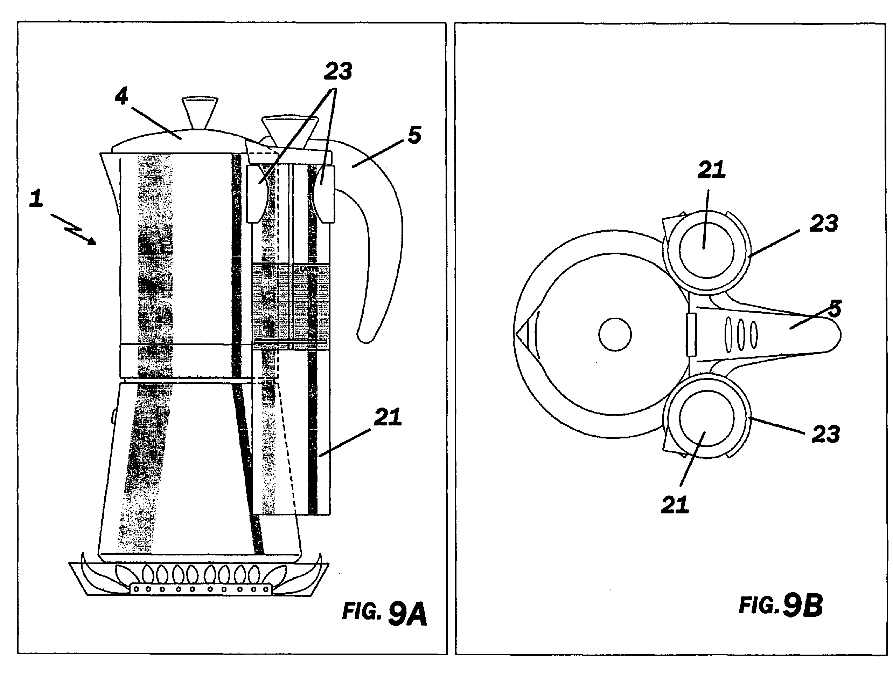

In other embodiments, said means for supporting the auxiliary container 21 include one or more resilient pliers 23 connected with the body of the coffee-maker 1. Particularly in figures 9A and 9b, two resilient pliers 23 are positioned in a symmetric way relative to the center of the handle 5 of the coffee-maker 1. In this way, it is possible to simultaneously warm up two different liquids.

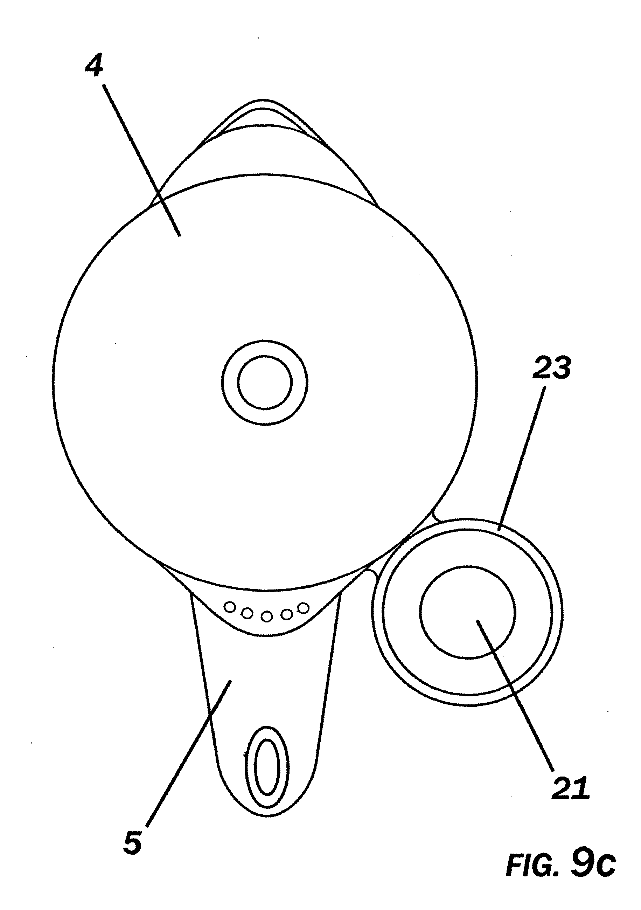

In the case of the coffee-maker of figure 9c, a single resilient pliers is present, which can be positioned as one wishes in different angular positions on the body of the coffee-maker, so as to support the auxiliary container 21.

Also in this case the auxiliary container 21 can be equipped with a tool for whipping the milk.

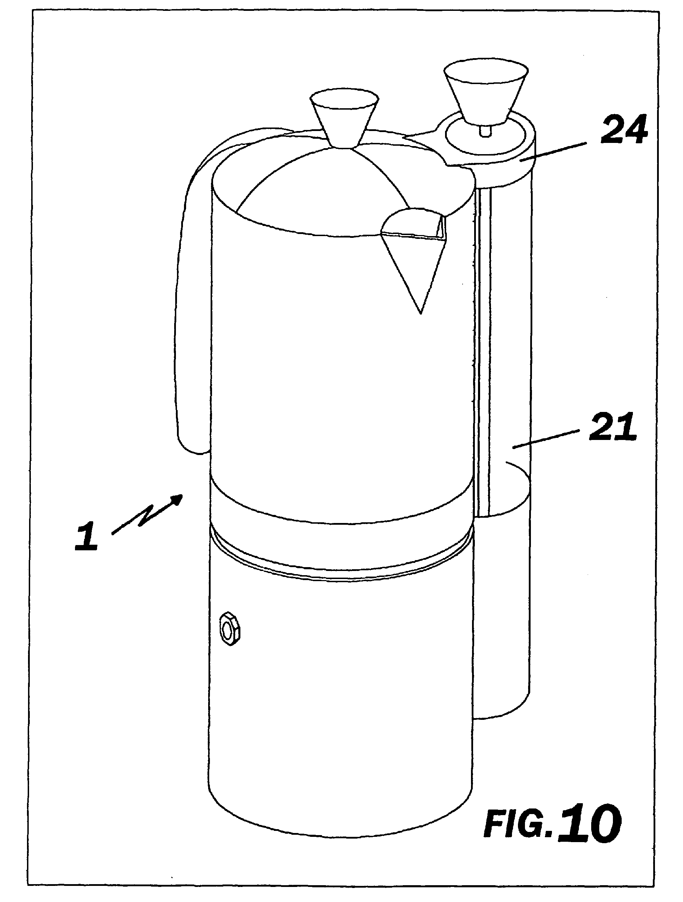

Referring to figure 10, the coffee-maker 1 is equipped with a resilient pliers 24 connected to the upper body 2 of the coffee-maker.

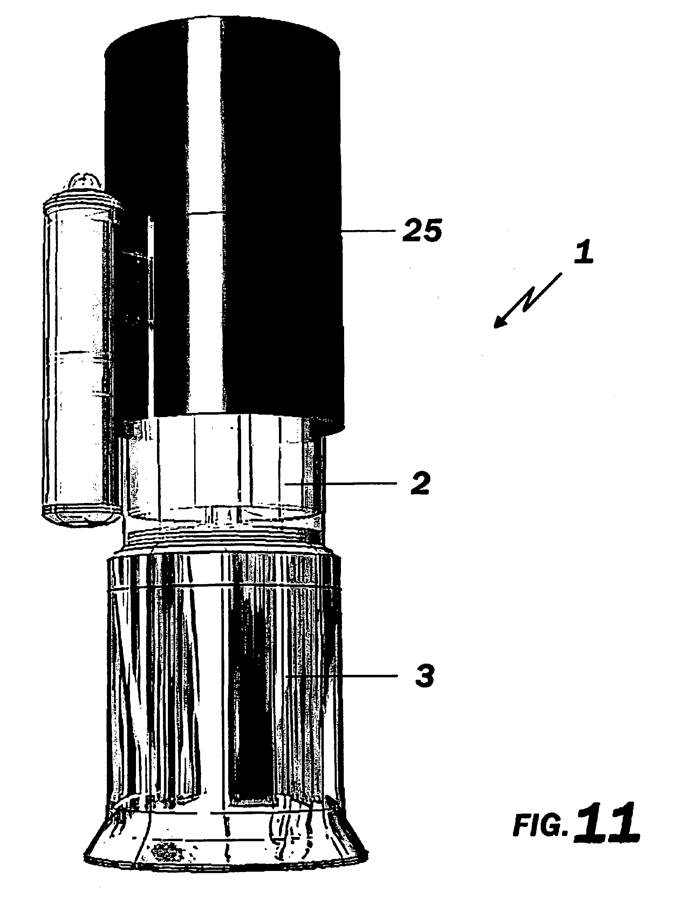

Referring to figure 11, the coffee-maker 1 further includes a thermally insulating tubular casing 25 shaped so as to be inserted on the upper body of the coffee-maker for maintaining hot the coffee.

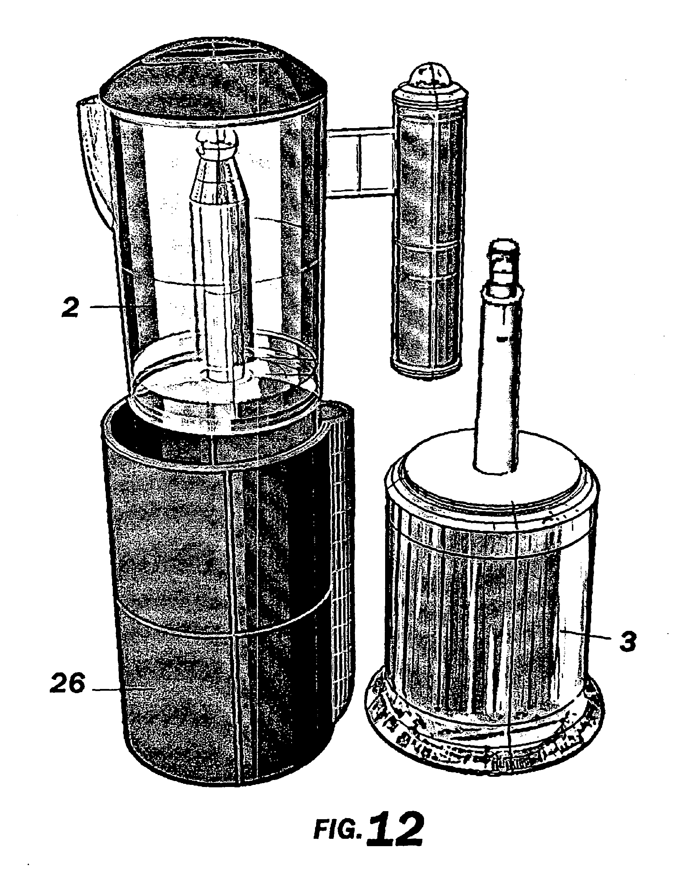

Referring to figure 12, the coffee-maker 1 further includes a thermally insulating tubular casing 26 shaped so as to receive the upper body of the coffee-maker for maintaining hot the coffee.

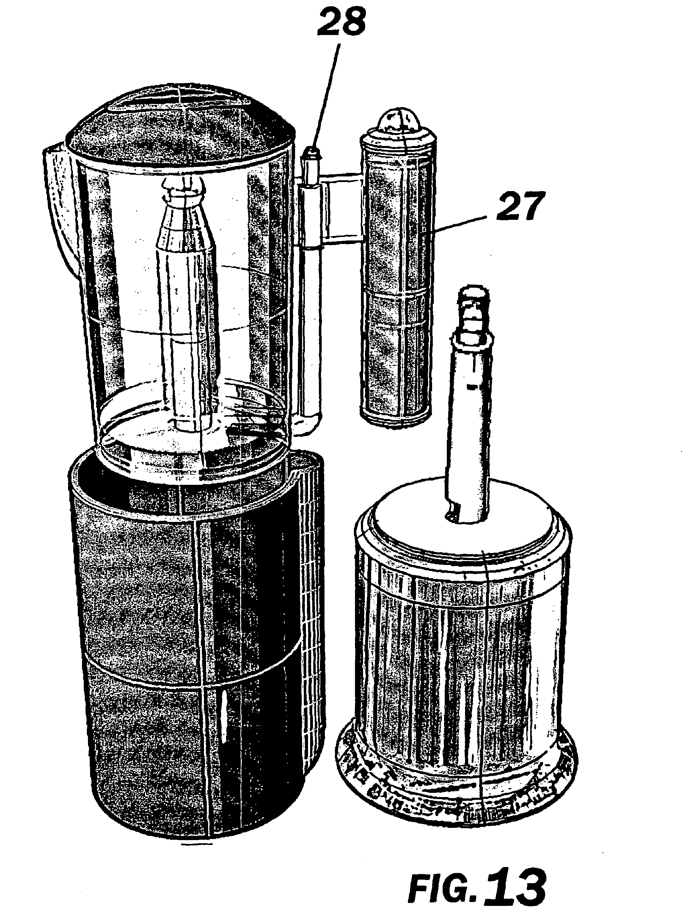

In figure 13, a particular embodiment,
wherein the handle 5 of the coffee-maker is shaped in such way that to form a container/distributor for sugar, cocoa or the like is shown. Furthermore, in the shown solution the upper body is connected in a decoupling way, by means of a coupling including an unblocking button 28, to the lower body of the coffee-maker for being used independently from the coffee-maker.

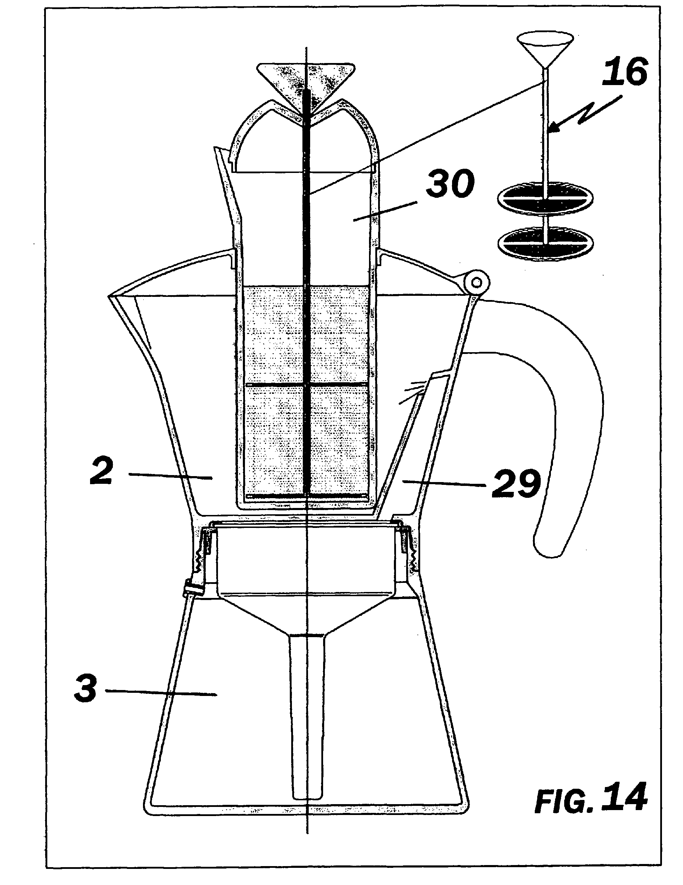

Referring to figure 14, an embodiment wherein the column 29 for the delivery of the coffee is placed in a side position with respect to an axis passing through the center of the coffee-maker is shown, so as to allow an auxiliary container 30 to be received in the central part of the upper body 2 of the coffee-maker.

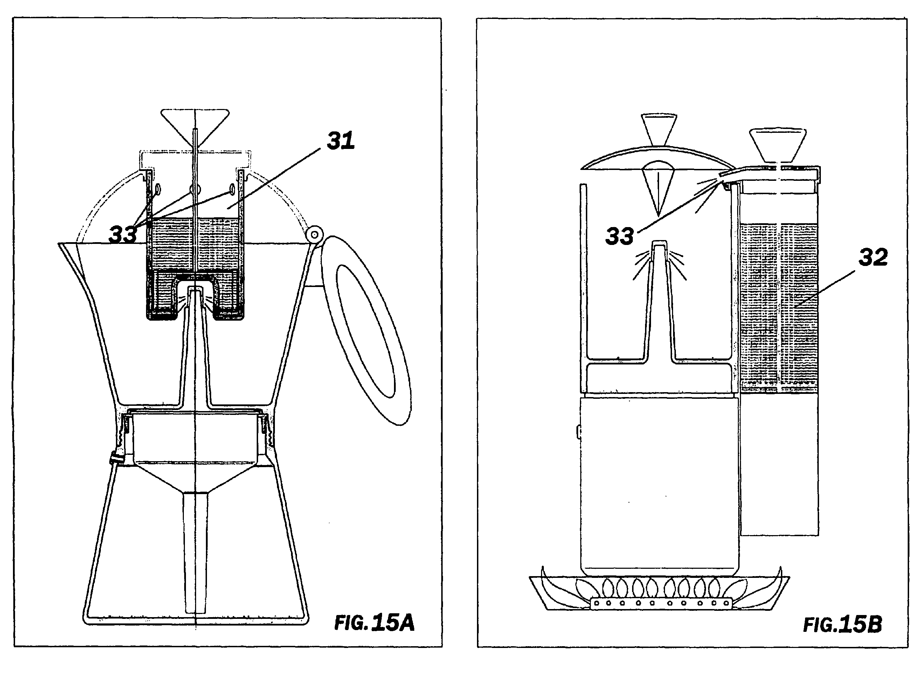

In figures 15A and 15B two other possible embodiments 31, 32 of the auxiliary container 21 are shown, which foresee the presence on the body of the container of openings 33 for the direct communication of the internal space of the auxiliary container with the internal space of the upper part of the coffee-maker.

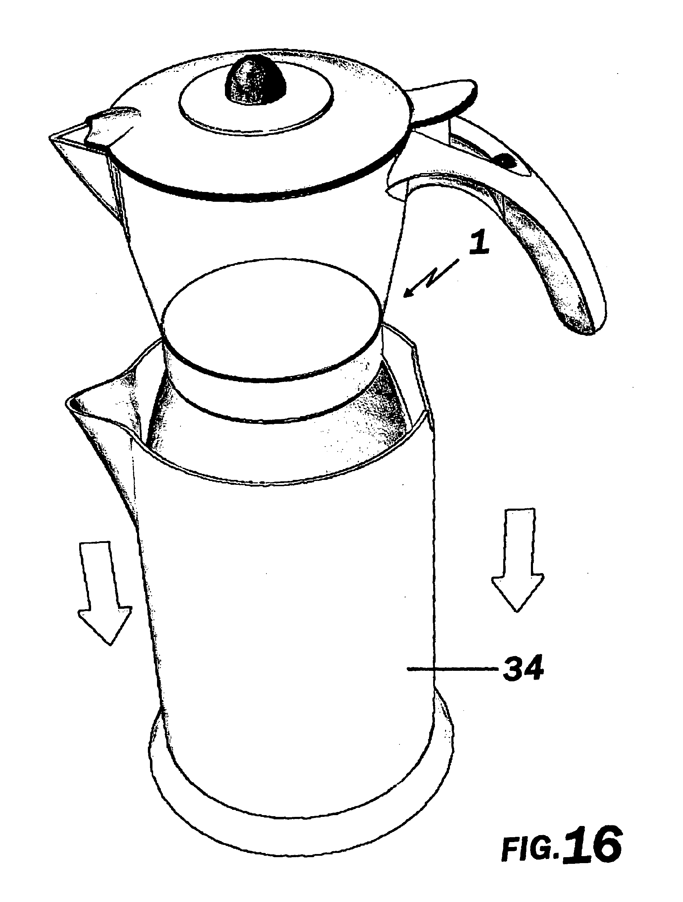

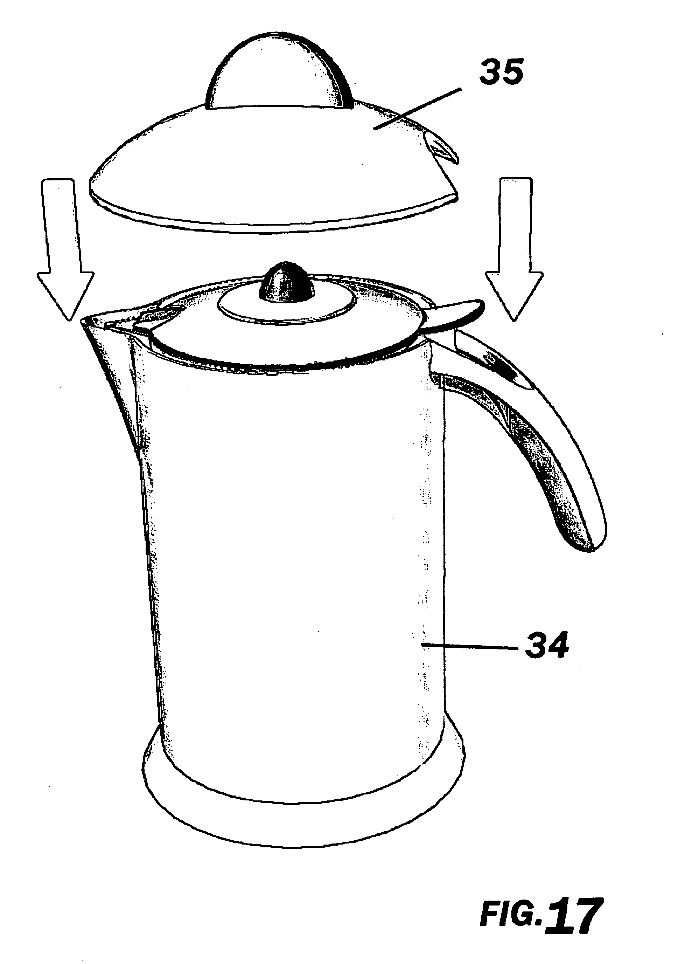

Finally, figures 16 and 17 show another example of coffee-maker 1 further including a thermally insulating casing 34 shaped so as to receive the coffee-maker with the purpose of maintaining hot the coffee. Particularly, in figure 17, the thermally insulating casing 34 is further equipped with a lid 35.

Obviously, without prejudice to the principle of the invention, construction details and embodiments could widely vary with respect to what has been described and shown by mere way of example only, without leaving the scope of the present invention, which is defined by the appended claims.

## Claims

1. Coffee-maker (1) of the "moka" type, including a lower body (3) and an upper body (2) connected in an decoupling way to the lower body (3) and defining a cavity for receiving the coffee, with a column (7) for the delivery of the coffee in said cavity, wherein said upper body (2) includes, in turn, a base part (6) embedding the column (7) for the delivery of the coffee and an upper part (8) defining the aforesaid cavity for the collection of the coffee which is apt to be mounted in a decoupling way onto the base part, such that said upper part (8) constitutes, in its uncoupled condition from the base part (6), a carafe-like container usable for serving the coffee,
said coffee-maker being **characterized in that** said upper part (8) is connected in a decoupling way to the base part (6) by means of a quick coupling device.

2. Coffee-maker according to claim 1, **characterized in that** said carafe-like upper part (8) includes a tubular appendix (9) protruding from a bottom part (10) thereof, in order to receive in a decoupling way said column (7) for the delivery of the coffee.

3. Coffee-maker according to claim 2, **characterized in that** said tubular appendix (9) is connected in a decoupling way to said column (7) for the delivery of the coffee by means of a bayonet or other quick coupling.

4. Coffee-maker according to claim 1, wherein said coffee-maker (1) further includes a lid (4) connected in an articulated way to said upper body (2), **characterized in that** said lid (4) includes a seat (13) suitable for receiving an auxiliary container (14) for the warming of a liquid, for example milk or cream, contained therein during the preparation of the coffee.

5. Coffee-maker according to claim 4, **characterized in that** said seat (13) consists of an opening of the lid (4), and **in that** the coffee-maker (1) further includes a removable plug (15) for closing said opening (13) when the coffee-maker is used as a classical "moka" without the auxiliary container (14).

6. Coffee-maker according to claim 4, **characterized in that** said auxiliary container (14) is equipped with a tool (16) for whipping the milk.

7. Coffee-maker according to any one of the claims 1-6, **characterized in that** it is equipped with a thermally insulating casing (17) shaped in such a way to receive and contain said carafe-like upper part (8) for maintaining hot the coffee.

8. Coffee-maker according to claim 7, **characterized in that** it is also equipped with a further thermally insulating casing (19) for covering said auxiliary container (14) in its condition abutted on the lid (4) of the coffee-maker (1), or considered as such.

9. Coffee-maker according to claim 1, **characterized in that** the carafe-like upper part (8) is connected in a decoupling way by means of a coupling including an unclamping element (36), to the base part (6).

10. Coffee-maker according to claim 9, **characterized in that** the decoupling connection between the carafe-like upper part (8) and the base part (6) is obtained through engagement of a tooth (37) controlled by the unclamping element (36) within a circumferential throat (38) so as to allow the coupling or decoupling of the carafe-like upper part (8) from the base part (6) independently from the relative angular position of the two elements (6, 8).

11. Coffee-maker according to claim 10, **characterized in that** between the driving element (36) and the engagement tooth (37) a transmission which is protected by a covering element (39) is interposed.

## Patentansprüche

1. Kaffeemaschine (1) vom "Mokka"-Typ, die einen unteren Körper (3) und einen oberen Körper (2) enthält, der trennbar mit dem unteren Körper (3) verbunden ist und einen Hohlraum zum Aufnehmen des Kaffees aufweist, wobei sich eine Säule (7) zur Abgabe des Kaffees in dem Hohlraum befindet, und der obere Körper (2) seinerseits einen Sockelteil (6), in dem die Säule (7) zur Abgabe des Kaffees eingebettet ist, und einen oberen Teil (8) enthält, der den Hohlraum zum Auffangen des Kaffees aufweist und trennbar an dem untern Teil angebracht werden kann, so dass der obere Teil (8) in seinem von dem Sockelteil (6) abgetrennten Zustand einen karaffenartigen Behälter bildet, der zum Servieren des Kaffees verwendet werden kann,
wobei die Kaffeemaschine **dadurch gekennzeichnet ist, dass** der obere Teil (8) mittels einer Schnellkupplungsvorrichtung trennbar mit dem Sockelteil (6) verbunden ist.

2. Kaffeemaschine nach Anspruch 1, **dadurch gekennzeichnet, dass** der karaffenartige obere Teil (8) einen röhrenförmigen Ansatz (9) enthält, der von einem Bodenteil (10) desselben vorsteht, um die Säule (7) zur Abgabe des Kaffees trennbar aufzunehmen.

3. Kaffeemaschine nach Anspruch 2, **dadurch gekennzeichnet, dass** der röhrenförmige Ansatz (9) mittels einer Bajonett- oder einer anderen Schnellkupplung trennbar mit der Säule (7) zur Abgabe des Kaffees verbunden ist.

4. Kaffeemaschine nach Anspruch 1, wobei die Kaffeemaschine (1) des Weiteren einen Deckel (4) enthält, der gelenkig mit dem oberen Körper (2) verbunden ist, **dadurch gekennzeichnet, dass** der Deckel (4) eine Aufnahme (13) enthält, die sich zum Aufnehmen eines Zusatzbehälters (14) zum Erwärmen einer Flüssigkeit, beispielsweise Milch oder Sahne, eignet, die bei der Zubereitung des Kaffees darin enthalten ist.

5. Kaffeemaschine nach Anspruch 4, **dadurch gekennzeichnet, dass** die Aufnahme (13) aus einer Öffnung des Deckels (4) besteht und dass die Kaffeemaschine (1) des Weiteren einen abnehmbaren Stopfen (15) enthält, mit dem die Öffnung (13) verschlossen wird, wenn die Kaffeemaschine als eine klassische "Mokka"-Maschine ohne den Zusatzbehälter (14) verwendet wird.

6. Kaffeemaschine nach Anspruch 4, **dadurch gekennzeichnet, dass** der Zusatzbehälter (14) mit einem Gerät (16) zum Schlagen der Milch ausgestattet ist.

7. Kaffeemaschine nach einem der Ansprüche 1-6, **dadurch gekennzeichnet, dass** sie mit einem wärmeisolierenden Gehäuse (17) versehen ist, das so geformt ist, dass es den karaffenartigen oberen Teil (1) aufnimmt und umschließt, um den Kaffee heiß zu halten.

8. Kaffeemaschine nach Anspruch 7, **dadurch gekennzeichnet, dass** sie auch mit einem weiteren wärmeisolierenden Gehäuse (19) versehen ist, mit dem der Zusatzbehälter (14) in seinem Zustand abgedeckt wird, in dem er an dem Deckel (4) der Kaffeemaschine (1) angelegt oder so zu betrachten ist.

9. Kaffeemaschine nach Anspruch 1, **dadurch gekennzeichnet, dass** der karaffenartige obere Teil (8) mittels einer Kupplung, die ein Löseelement (36) enthält, trennbar mit dem Sockelteil (6) verbunden ist.

10. Kaffeemaschine nach Anspruch 9, **dadurch gekennzeichnet, dass** die trennbare Verbindung zwischen dem karaffenartigen oberen Teil (8) und dem Sockelteil (6) durch Eingriff eines Zahns (37), der durch das Löseelement (36) gesteuert wird, in eine Umfangsverengung (38) hergestellt wird, um den karaffenartigen oberen Teil (8) unabhängig von der relativen Winkelposition der zwei Elemente (6, 8) mit dem Sockelteil (6) verbinden und von ihm trennen zu können.

11. Kaffeemaschine nach Anspruch 10, **dadurch gekennzeichnet, dass** zwischen dem antreibenden Element (36) und dem Eingriffszahn (37) ein Getriebe angeordnet ist, das durch ein Abdeckelement (39) geschützt wird.

## Revendications

1. Machine à café (1) du type « moka », comprenant un corps inférieur (3) et un corps supérieur (2) raccordé d'une manière découplée au cors inférieur (3) et définissant une cavité pour recevoir le café, avec une colonne (7) pour la distribution du café dans ladite cavité, dans laquelle ledit corps supérieur (2) comprend, à son tour, une partie de base (6) incorporant la colonne (7) pour la distribution du café et une partie supérieure (8) définissant la cavité mentionnée ci-dessus pour collecter le café pouvant être montée d'une manière découplée sur la partie de base, de telle sorte que ladite partie supérieure (8) constitue, dans son état découplé de la partie de base (6), un récipient similaire à une carafe pouvant être utilisée pour servir le café,
ladite machine à café étant **caractérisée en ce que** ladite partie supérieure (8) est raccordée d'une manière découplée à la partie de base (6) au moyen d'un dispositif de raccordement rapide.

2. Machine à café selon la revendication 1, **caractérisée en ce que** ladite partie supérieure similaire à une carafe (8) comprend un appendice tubulaire (9) faisant saillie depuis une partie inférieure (10) de cette dernière, afin de recevoir d'une manière découplée ladite colonne (7) pour la distribution du café.

3. Machine à café selon la revendication 2, **caractérisée en ce que** ledit appendice tubulaire (9) est raccordé d'une manière découplée à ladite colonne (7) pour la distribution du café au moyen d'une attache à baïonnette ou d'un autre raccord rapide.

4. Machine à café selon la revendication 1, **caractérisée en ce que** ladite machine à café (1) comprend en outre un couvercle (4) raccordé d'une manière articulée audit corps supérieur (2), **caractérisée en ce que** ledit couvercle (4) comprend un siège (13) approprié pour recevoir un récipient auxiliaire (14) pour le réchauffement d'un liquide, par exemple du lait ou de la crème, contenu à l'intérieur pendant la préparation du café.

5. Machine à café selon la revendication 4, **caractérisée en ce que** ledit siège (13) est constitué d'une ouverture dans le couvercle (4), et **en ce que** la machine à café (1) comprend en outre un obturateur amovible (15) pour fermer ladite ouverture (13) lorsque la machine à café est utilisée en tant que « moka » classique sans le récipient auxiliaire (14).

6. Machine à café selon la revendication 4, **caractérisée en ce que** ledit récipient auxiliaire (14) est équipé d'un outil (16) pour battre le lait.

7. Machine à café selon l'une quelconque des revendications 1 à 6, **caractérisée en ce qu'**elle est équipée d'un boîtier à isolation thermique (17) formé de manière à recevoir et contenir ladite partie supérieure similaire à une carafe (8) pour maintenir le café au chaud.

8. Machine à café selon la revendication 7, **caractérisée en ce qu'**elle est également équipée d'un autre boîtier à isolation thermique (19) pour recouvrir ledit récipient auxiliaire (14) lorsqu'il est en butée contre le couvercle (4) de la machine à café (1), ou considéré en tant que tel.

9. Machine à café selon la revendication 1, **caractérisée en ce que** la partie supérieure similaire à une carafe (8) est raccordée d'une manière découplée, au moyen d'un couplage comprenant un élément de déblocage (36), à la partie de base (6).

10. Machine à café selon la revendication 9, **caractérisée en ce que** le raccordement découplé entre la partie supérieure similaire à une carafe (8) et la partie de base (6) est obtenu par l'engagement d'une dent (37) contrôlée par l'élément de déblocage (36) dans un orifice circonférentiel (38) de manière à permettre le couplage ou découplage de la partie supérieure similaire à une carafe (8) de la partie de base (6) indépendamment de la position angulaire relative des deux éléments (6, 8).

11. Machine à café selon la revendication 10, **caractérisée en ce qu'**une transmission qui est protégée par un élément de revêtement (39) est interposée entre l'élément d'entraînement (36) et la dent d'engagement (37).
